(19) Europäisches Patentamt
European Patent Office
Office européen des brevets

(11) **EP 4 524 509 A1**

(12) **EUROPÄISCHE PATENTANMELDUNG**

(43) Veröffentlichungstag:
**19.03.2025 Patentblatt 2025/12**

(21) Anmeldenummer: **24198516.7**

(22) Anmeldetag: **04.09.2024**

(51) Internationale Patentklassifikation (IPC):
**G01B 7/16** *(2006.01)*

(52) Gemeinsame Patentklassifikation (CPC):
**G01B 7/18**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.09.2023 DE 102023124913**

(71) Anmelder: **duotec GmbH**
**58553 Halver (DE)**

(72) Erfinder: **Weber, Werner**
**58553 Halver (DE)**

(74) Vertreter: **Lippert Stachow Patentanwälte**
**Rechtsanwälte**
**Partnerschaft mbB**
**Frankenforster Strasse 135-137**
**51427 Bergisch Gladbach (DE)**

(54) **DEHNUNGSMESSEINRICHTUNG**

(57) Die Erfindung betrifft eine Dehnungsmesseinrichtung umfassend einen Grundkörper, dessen Dehnung durch die Dehnungsmesseinrichtung zu messen ist, und einen Messkörper, wobei der Messkörper einen ersten und einen zweiten Befestigungsabschnitt aufweist, mittels derer er an dem Grundkörper befestigt ist und die entlang einer Messrichtung um eine Messstrecke voneinander beabstandet sind und über diese Messstrecke hinweg durch einen Messabschnitt des Dehnungsmesskörpers miteinander verbunden sind, wobei der Messabschnitt und der Grundkörper sich über die Messstrecke hinweg in ihren Dehnungeigenschaften entlang der Messrichtung unterscheiden, wobei ein Dehnungsmesssensor an dem Messabschnitt befestigt ist.

**Fig. 1a**

EP 4 524 509 A1

**Beschreibung**

Die Erfindung betrifft eine Dehnungsmesseinrichtung gemäß dem Oberbegriff von Anspruch 1 sowie ein Messsystem umfassend eine solche Dehnungsmesseinrichtung und eine Datenverarbeitungseinrichtung.

Gattungsgemäße Dehnungsmesseinrichtungen dienen zum Ermitteln von Materialspannungen. Bei bekannten Materialeigenschaften, wie etwa dem Elastizitätsmodul (E-Modul) eines Materials, kann die Materialspannung ermittelt werden, indem durch eine Dehnungsmesseinrichtung die Dehnung eines Materials ermittelt wird und unter Berücksichtigung der bekannten Materialeigenschaften hieraus die Materialspannung ermittelt wird. Üblicherweise weisen solche Dehnungsmesseinrichtungen einen Dehnungsmesssensor auf, der als Foliendehnungsmessstreifen ausgebildet ist. Ein solcher Foliendehnungsmessstreifen (DMS) wird üblicherweise an seinen in einer Messrichtung voneinander beabstandeten Endbereichen elektrisch kontaktiert. Bei einer Dehnung entlang der Messrichtung verändert sich der Widerstand des DMS, und ein diese Veränderung charakterisierender Wert wird als Messsignal des DMS zur Charakterisierung der erfolgten Dehnung aus dem DMS ausgelesen. Um die Dehnung eines bestimmten Grundkörpers ermitteln zu können, ist der einfachste Ansatz, einen solchen DMS direkt auf dem Grundkörper aufzubringen. Indem der DMS über die Messstrecke hinweg fest mit dem Grundkörper verbunden wird, kann eine über die Messstrecke hinweg erfolgte Dehnung des Grundkörpers auf den DMS übertragen werden, sodass aus dem DMS ein Messsignal ausgelesen werden kann, das die Dehnung des Grundkörpers über die Messstrecke hinweg charakterisiert. Aus dem Messsignal kann somit ein Wert für die Dehnung des Grundkörpers ermittelt werden. Bei gattungsgemäßen Dehnungsmesseinrichtungen hat sich jedoch als problematisch herausgestellt, dass herkömmliche DMS nur eine geringe Empfindlichkeit aufweisen, sodass nur eine erhebliche Dehnung mit einer hinreichenden Genauigkeit durch das von dem DMS ausgelesene Messsignal charakterisiert werden kann. Diesem Problem wurde im Stand der Technik durch Entwicklung von Dehnungstransformatoren begegnet. Bei einem solchen Dehnungstransformator wird an dem Grundkörper, dessen Dehnung durch die Dehnungsmesseinrichtung erfasst werden soll, ein Messkörper vorgesehen, der zwei in Messrichtung voneinander beabstandete Befestigungsabschnitte aufweist, die durch einen Messabschnitt miteinander verbunden sind. Indem der Messkörper nur mit seinen Befestigungsabschnitten an dem Grundkörper befestigt wird, der Messabschnitt sich jedoch relativ zum Grundkörper bewegen kann, kann der Messabschnitt gezielt so ausgestaltet sein, dass der Messabschnitt bei einer Dehnung des Grundkörpers in einem Bereich in dem der DMS angeordnet ist, stärker gedehnt wird als der Grundkörper selbst, sodass auf Höhe des DMS eine größere, von dem DMS auslesbare Dehnung auftritt. Die Realisierung von Dehnungsmesseinrichtungen mit einer hinreichend präzisen Auflösung bedingt gemäß sämtlichen im Stand der Technik vorgeschlagenen Lösungen jedoch stets das Vorsehen von großvolumigen und/oder kostenintensiven Dehnungsmesseinrichtungen, da nur durch das Vorsehen entsprechend großvolumiger Komponenten eine hinreichend gute Genauigkeit der Erfassung der Dehnung durch den DMS bzw. die Dehnungsmesseinrichtung bereitgestellt werden kann.

Der vorliegenden Erfindung liegt die Aufgabe zugrunde, eine Dehnungsmesseinrichtung bzw. ein Messsystem bereitzustellen, die bzw. das zumindest einen Nachteil gattungsgemäßer Dehnungsmesseinrichtungen zumindest teilweise behebt.

Als eine Lösung der der vorliegenden Erfindung zugrunde liegenden Aufgabe schlägt die Erfindung eine Dehnungsmesseinrichtung mit den Merkmalen gemäß Anspruch 1 vor. Die Dehnungsmesseinrichtung umfasst einen Grundkörper, dessen Dehnung durch die Dehnungsmesseinrichtung zu messen ist. Die Dehnungsmesseinrichtung ist somit dazu ausgebildet, ein Messsignal auszugeben, sei es durch aktives Ausgeben oder durch passives Ausgelesen-werden, das die Dehnung des Grundkörpers charakterisiert. Insbesondere kann aus dem Messsignal ein Wert der Dehnung des Grundkörpers ausgelesen bzw. ermittelt werden. Die Dehnungsmesseinrichtung umfasst ferner einen Messkörper, wobei der Messkörper einen ersten und einen zweiten Befestigungsabschnitt aufweist, mittels derer er an dem Grundkörper befestigt ist. Entlang einer Messrichtung, die eine vordefinierte Raumrichtung definiert, sind die Befestigungsabschnitte um eine Messstrecke voneinander beabstandet. Die Messstrecke weist eine definierte Streckenlänge auf, wie dies einer Strecke im Allgemeinen eigen ist. Über die Messstrecke hinweg sind die Befestigungsabschnitte durch einen Messabschnitt des Dehnungsmesskörpers miteinander verbunden. Der Dehnungsmesskörper weist somit die beiden Befestigungsabschnitte und den Messabschnitt integral auf, und der Messabschnitt überbrückt die gesamte Messstrecke entlang der Messrichtung. Bevorzugt sind die Befestigungsabschnitte jeweils unmittelbar mit dem Messabschnitt verbunden. Der Dehnungsmesskörper umfassend die Befestigungsabschnitte und den Messabschnitt kann aus einem einzigen Material einstückig gefertigt sein oder verschiedene Körperabschnitte aufweisen, die aus unterschiedlichen Materialien bestehen, beispielsweise können die Befestigungsabschnitte aus einem anderen Material als der Messabschnitt hergestellt sein, beispielsweise kann der Messabschnitt selbst Teilabschnitte aufweisen, die aus unterschiedlichen Materialien bestehen. In jedem Fall ist der Grundkörper jedoch dergestalt in sich zusammenhängend ausgebildet, dass eine Relativbewegung der beiden Befestigungsabschnitte in Messrichtung zueinander zwingend mit einer Veränderung der Streckenlänge der Messstrecke und dadurch mit einer, je nach Richtung der Relativbewegung, Streckung oder Stauchung, vorliegend beides als "Dehnung" bezeichnet in dem Sinne, dass die Dehnung positiv (Streckung) oder negativ (Stauchung) sein kann, des Messabschnitts in der Messrichtung einhergeht. Der Messabschnitt und der Grundkörper unterscheiden sich über die Messstrecke hinweg in ihren Dehnungseigenschaften, die sie entlang der Messrichtung aufweisen. Die Dehnungseigenschaften von Grundkörper und/oder Messabschnitt können beispielsweise, bezogen auf die Messrichtung, innerhalb der Messstrecke Variationen aufweisen oder über die Messstrecke hinweg durchgehend gleichbleibend sein, über die gesamte Messstrecke hinweg, d.h. bei Aufbringung einer Zug- oder Stauchbelastung am Anfang und Ende der Messstrecke auf Grundkörper bzw. Messabschnitt in Messrichtung, weisen Grundkörper und Messabschnitt jedoch jedenfalls jeweils eine definierte Dehnungseigenschaft auf, in der sie sich voneinander unterscheiden. Über die gesamte Messstrecke hinweg weist der Messabschnitt somit eine andere Dehnungseigenschaft auf als der Grundkörper. Die Dehnungseigenschaft kann beispielsweise als Steifigkeit eines Körpers ausgedrückt werden, das neben dem Material des Körpers auch von der Form des Körpers abhängt. Die Dehnungsmesseinrichtung umfasst ferner einen Dehnungsmesssensor, der an dem Messabschnitt befestigt ist. Durch die Befestigung des Dehnungsmesssensors an dem Messabschnitt ist sichergestellt, dass der Dehnungsmesssensor eine Dehnung des Messabschnitts aufnehmen kann, d. h. dass eine Dehnung des Messabschnitts auf den Dehnungsmesssensor über den Kontaktbereich hinweg, mittels dessen der Dehnungsmesssensor an dem Messabschnitt befestigt ist, auf den Dehnungsmesssensor übertragen wird. Der Kontaktbereich kann durch die untenstehend näher erläuterte Messfläche definiert sein bzw. durch diese ausgebildet sein. Erfindungsgemäß ist der Dehnungsmesssensor als Halbleiter-Dehnungsmesssensor ausgebildet und fest mit dem Messabschnitt verbunden. Durch die feste Verbindung des Dehnungsmesssensors mit dem Messabschnitt ist eine möglichst verlustfreie Übertragung einer Dehnung des Messabschnitts auf den Dehnungsmesssensor sichergestellt. Besonders bevorzugt ist der Dehnungsmesssensor als Si-Dehnungsmesssensor, d. h. im Wesentlichen aus Silizium bestehend, beispielsweise mittels eines Si-Wafers, insbesondere dotierten Si-Wafers, hergestellt, ausgebildet. Beispielsweise können solche Halbleiter-Dehnungsmesssensoren einen Sensorkörperabschnitt aufweisen, der auf einen Wafer aufgebracht oder in einem Wafer integriert ist und auf den Elektroden zur Messung von Widerständen aufgebracht werden, beispielsweise mittels üblicher Halbleiter-Kontaktierungstechnologie, wie etwa Lithographie und/oder Dünnschichttechnik, wobei bevorzugt der Messkörper ein Si-Kristall ist, der insbesondere dotiert sein kann. Der Wafer bildet somit ein Substrat aus, auf dem der Sensorkörperabschnitt angeordnet ist. Beispielsweise kann der Sensorkörperabschnitt in dem Wafer integriert ausgebildet sein, indem der Wafer (der bevorzugt ein Si-Kristall ist) mit Ionen zur Dotierung lokal bestrahlt wird. Beispielsweise kann der Sensorkörperabschnitt auf dem Wafer angeordnet werden, indem ein Si-Kristall, insbesondere dotierter Si-Kristall, mittels Epitaxie-Verfahrens auf dem Wafer aufgebracht wird. Halbleiter-Dehnungsmesssensoren, die einen Si-Kristall bzw. Si-Kristall-Sensorkörperabschnitt umfassen, werden vorliegend als Si-Kristall-Dehnungsmesssensoren bezeichnet. Halbleiter-Dehnungsmesssensoren beruhen auf dem Grundprinzip, dass durch eine Dehnung des Halbleiter-Dehnungsmesssensors die Bandstruktur verändert wird, wodurch sich seine Resistivität verändert. Als besonders vorteilhaft haben sich Si-Kristall-Dehnungsmesssensoren herausstellt, bei denen aufgrund der Si-Kristallstruktur die Veränderung der Bandstruktur besonders gut reproduzierbar ist und zu sehr präzisen Veränderungen der Resistivität führt. Dabei hat sich als besonders vorteilhaft herausgestellt, dass solche Halbleiter-Dehnungsmesssensoren, insbesondere Si-Dehnungsmesssensoren, insbesondere Si-Kristall-Dehnungsmesssensoren, auch zur Detektion von Dehnungen in zwei aufeinander senkrecht stehenden Richtungen geeignet sind, da sich der Widerstand des Halbleiters sowohl in Abhängigkeit von einer ersten als auch in Abhängigkeit von einer zweiten, auf der ersten senkrecht stehenden Richtung verändert. So kann an einem solchen Halbleiter durch Messung des Widerstands die Veränderung der Bandstruktur festgestellt werden, die auf einer Dehnung des Halbleiters in den beiden verschiedenen Richtungen beruht und hierauf präzise auf eine Dehnung des Dehnungsmesssensors in diesen beiden Richtungen rückgeschlossen werden. Es hat sich herausgestellt, dass ein solcher Halbleiter-Dehnungsmesssensor einen besonders großen K-Faktor aufweist, d. h. ein besonders großes Verhältnis zwischen der Widerstandsänderung zur Längenänderung des Dehnungsmesssensors in einer bestimmten Messrichtung. Der K-Faktor wird üblicherweise angegeben als:

$$K = \frac{\Delta R / R}{\varepsilon}$$

, wobei ε die Längenänderung, d. h. Dehnung des Dehnungsmesssensors, charakterisiert und R den Widerstand des Dehnungsmesssensors angibt. Im Vergleich zu herkömmlichen Foliendehnungsmesssensoren kann ein Halbleiter-Dehnungsmesssensor einen um etwa 40-fach größeren K-Faktor aufweisen. Die Erfinder haben erkannt, dass trotz der erhöhten Herstellkosten für einen solchen Halbleiter-Dehnungsmesssensor ein solcher Dehnungsmesssensor dennoch kostengünstig und zur Realisierung einer hochauflösenden Messeinrichtung eingesetzt werden kann, da ein solcher Halbleiter-Dehnungsmesssensor besonders klein ausgestaltet werden kann und darüber hinaus an diesem auf besonders einfache Weise mittels Halbleiter-Kontaktierungstechnik elektrische Elektroden vorgesehen werden können, mittels derer der Halbleiter-Dehnungsmesssensor kontaktiert bzw. mit Strom gespeist und ausgelesen werden kann. Als besonders vorteilhaft hat sich herausgestellt, die Dehnungsmesssensoren jeweils dergestalt auszugestalten, dass sie eine Dicke von weniger als 500 μm, insbesondere weniger als 200 μm, insbesondere weniger als 100 μm, insbesondere weniger als 50 μm, und/oder eine flächige Erstreckung von weniger als 1 mm², insbesondere weniger als 0,5 mm², insbesondere weniger als 0,3 mm² aufweisen. Die flächige Erstreckung gibt dabei allgemein die Erstreckung des Dehnungsmesssensors entlang zwei aufeinander senkrecht stehenden Flächenrichtungen an, wobei die Dicke des Dehnungsmesssensors die Erstreckungslänge des Dehnungsmesssensors senkrecht zu den beiden Flächenrichtungen angibt. Der Erfindung liegt die Erkenntnis zugrunde, dass durch einen solchen Halbleiter-Dehnungsmesssensor sowohl die Herstellkosten als auch die räumlichen Dimensionen einer Dehnungsmesseinrichtung besonders klein gehalten werden können, ohne hierdurch die Auflösung unmäßig zu beschränken, sodass die Dehnungsmesseinrichtung nicht nur kostengünstig herstellbar ist, sondern auch für eine große Vielfalt an Anwendungen einsetzbar ist. Dabei hat sich als besonders vorteilhaft erwiesen, dass auf einen solchen Halbleiter-Dehnungsmesssensor mittels einer sehr kleinen Kontaktfläche bzw. Messfläche zwischen Dehnungsmesssensoren und Messabschnitt, über die hinweg der Dehnungsmesssensor mit dem Messabschnitt verbunden ist, eine sehr große Kraft auf den Dehnungsmesssensor übertragen werden kann, sodass mit einer solchen kleinen Ausgestaltung des Dehnungsmesssensors bzw. einer kleinen Kontaktfläche bzw. kleinen Messfläche eine Dehnung mit hoher Auflösung von dem Halbleiter-Dehnungsmesssensor aufgenommen werden kann.

Besonders bevorzugt ist der Messkörper nur mittels seiner Befestigungsabschnitte positionsfest relativ zum Grundkörper fixiert, wobei der Messabschnitt entlang der Messrichtung relativ zum Grundkörper beweglich ist. Besonders bevorzugt ist der Messabschnitt senkrecht zur Messrichtung von dem Grundkörper beabstandet. In einer Ausführungsform sind die Befestigungsabschnitte jeweils über ihre gesamte Erstreckung in Messrichtung hinweg positionsfest relativ zum Grundkörper fixiert. Dabei ist zu berücksichtigen, dass die Befestigungsabschnitte jeweils einen definierten Teil des Messkörpers ausbilden und nicht zwingend ununterbrochen durchgehend ausgestaltet sein müssen, jedoch in Ausführungsformen auch ununterbrochen ausgestaltet sein können. Voneinander, d. h. mit ihren in Messrichtung zueinander weisenden Seiten, sind die Befestigungsabschnitte in Messrichtung voneinander beabstandet und durch den Messabschnitt miteinander verbunden. Indem der Messkörper nur mittels seiner Befestigungsabschnitte an dem Grundkörper fixiert ist, der Messabschnitt hingegen relativ zum Grundkörper beweglich ist, kann eine Bewegung, insbesondere Dehnung, des Messabschnitts ohne Berücksichtigung der Fixierung des Messkörpers am Grundkörper erfolgen, wodurch eine große Freiheit bei der Wahl der Gestaltung des Messabschnitts besteht und dadurch der Messabschnitt besonders gezielt zum Ausüben einer vordefinierten Dehnung in Abhängigkeit von einer Dehnung des Grundkörpers ausgebildet sein kann.

In einer Ausführungsform weist der Messabschnitt zumindest zwei, insbesondere zumindest drei, in Messrichtung hintereinander angeordnete Teilabschnitte auf. Der Dehnungsmesssensor ist an einem ersten der Teilabschnitte angeordnet. Ein zweiter der Teilabschnitte verbindet den ersten Teilabschnitt mit dem ersten Befestigungsabschnitt. Der erste Teilabschnitt ist somit von dem ersten Befestigungsabschnitt beabstandet und durch den zweiten Teilabschnitt mit dem ersten Befestigungsabschnitt verbunden. Der erste Teilabschnitt unterscheidet sich bevorzugt von dem zweiten Teilabschnitt in seiner Dehnbarkeit entlang der Messrichtung. Besonders bevorzugt weist der Messabschnitt einen dritten Teilabschnitt auf, der den ersten Teilabschnitt mit dem zweiten Befestigungsabschnitt verbindet. Der erste Teilabschnitt ist bei dieser Ausführungsform somit auch von dem zweiten Befestigungsabschnitt beabstandet und durch den dritten Teilabschnitt mit dem zweiten Befestigungsabschnitt verbunden. Der erste Teilabschnitt unterscheidet sich bevorzugt von dem dritten Teilabschnitt in seiner Dehnbarkeit entlang der Messrichtung. Durch das Vorsehen unterschiedlicher Teilabschnitte in dem Messabschnitt selbst kann der Messabschnitt gezielt so ausgestaltet sein, dass bei einer Dehnung des Messabschnitts über die Messstrecke hinweg ein besonders großer Anteil dieser Dehnung auf den ersten Teilabschnitt entfällt oder ein besonders kleiner Anteil dieser Dehnung auf den ersten Teilabschnitt entfällt, sodass besonders vorteilhaft Einfluss auf die Dehnung des Messabschnitts in genau dem Bereich bzw. Teilabschnitt genommen werden kann, innerhalb dessen der Dehnungsmesssensor an dem Messabschnitt befestigt ist. Bevorzugt beträgt die Dehnung des Messabschnitts bei einer Dehnung in Messrichtung über die Messstrecke hinweg innerhalb des ersten Teilabschnitts mindestens das Doppelte, insbesondere mindestens das Dreifache, insbesondere mindestens das Zehnfache, insbesondere mindestens das Dreißigfache der Dehnung innerhalb des zweiten und/oder dritten Teilabschnitts, oder beträgt die Dehnung des Messabschnitts bei einer Dehnung in Messrichtung über die Messstrecke hinweg innerhalb des ersten Teilabschnitts höchstens die Hälfte, insbesondere höchstens ein Drittel, insbesondere höchstens ein Zehntel, insbesondere höchstens ein Dreißigstel der Dehnung innerhalb des zweiten und/oder dritten Teilabschnitts, wobei die Dehnung als Verhältnis zwischen einer Längenänderung und einer Ausgangslänge definiert ist. Besonders bevorzugt ist der Dehnungsmesssensor ausschließlich innerhalb des ersten Teilabschnitts starr mit dem Messabschnitt verbunden. In einer Ausführungsform ist der Messabschnitt dergestalt ausgebildet, dass bei einer Dehnung des Messabschnitts über die gesamte Messstrecke hinweg, d. h. über seine gesamte Erstreckung entlang der Messrichtung über die Messstrecke hinweg, mindestens 80 %, insbesondere mindestens 90 % seiner durch die Dehnung verursachten Längenänderung ausschließlich innerhalb des ersten Teilabschnitts erfolgt, wohingegen der erste Teilabschnitt in Messrichtung eine Erstreckungslänge von weniger als 50 %, insbesondere weniger als 20 %, insbesondere weniger als 10 % der Streckenlänge der Messstrecke in Messrichtung aufweist. In einer Ausführungsform ist der Messabschnitt dergestalt ausgebildet, dass bei einer Dehnung des Messabschnitts über die gesamte Messstrecke hinweg, d. h. über seine gesamte Erstreckung entlang der Messrichtung über die Messstrecke hinweg, weniger als 20 %, insbesondere weniger als 10 % der durch die Dehnung verursachten Längenänderung innerhalb des ersten Teilabschnitts erfolgt, wohingegen der erste Teilabschnitt in Messrichtung eine Erstreckungslänge von mehr als 10 %, insbesondere mehr als 20 %, insbesondere mehr als 30 % der Streckenlänge der Messstrecke in Messrichtung aufweist. In einer Ausführungsform weist der Messabschnitt in dem ersten Teilabschnitt ein Material auf, dass sich in seinem E-Modul als Materialeigenschaft von dem Material unterscheidet, aus dem der zweite und insbesondere der dritte Teilabschnitt hergestellt ist. In einer Ausführungsform weist der erste Teilabschnitt einen Querschnitt senkrecht zur Messrichtung auf, der sich von dem Querschnitt des zweiten Teilabschnitts und insbesondere des dritten Teilabschnitts unterscheidet. Allgemein bevorzugt unterscheidet sich der erste Teilabschnitt in seiner Steifigkeit, das seine Dehnbarkeit als Körper definiert und somit von dem Material des Teilabschnitts und von seiner Geometrie abhängt, von der Steifigkeit des zweiten Teilabschnitts und insbesondere des dritten Teilabschnitts. Allgemein bevorzugt weist der erste Teilabschnitt eine Erstreckungslänge entlang der Messrichtung auf, die weniger als 20 %, insbesondere weniger als 10 %, insbesondere weniger als 5 %, insbesondere weniger als 2 % der Messstrecke beträgt. Allgemein bevorzugt weist der erste Teilabschnitt und/oder der Messabschnitt insgesamt eine Erstreckungslänge entlang der Messrichtung auf, die weniger als 5 mm, insbesondere weniger als 3 mm, insbesondere weniger als 1 mm beträgt.

In einer Ausführungsform weist der Messabschnitt innerhalb der Messstrecke einen kleineren Querschnitt senkrecht zur Messrichtung auf als der Grundkörper innerhalb der Messstrecke. In einer Ausführungsform ist der Messabschnitt aus einem über die Messstrecke hinweg dehnbareren Material hergestellt als der Grundkörper. Über die Messstrecke hinweg dehnbar bezieht sich dabei auf die Dehnbarkeit bei einer Kraftbelastung an den beiden Enden der Messstrecke, so dass auf den Messkörper über die Messstrecke hinweg eine Dehnung aufgeprägt wird. In einer Ausführungsform weist der Messabschnitt innerhalb der Messstrecke einen größeren Querschnitt senkrecht zur Messrichtung auf als die Befestigungsabschnitte. In einer Ausführungsform ist der Messabschnitt über die Messstrecke hinweg aus einem steiferen Material hergestellt als die Befestigungsabschnitte. Durch die Ausgestaltung des Messabschnitts dergestalt, dass er einen anderen Querschnitt als die Befestigungsabschnitte innerhalb der Messstrecke aufweist, kann bereits durch die Ausgestaltung des Querschnitts besonders vorteilhaft Einfluss auf die Dehnbarkeit des Messabschnitts genommen werden, um auf Höhe des Dehnungsmesssensors eine möglichst optimal von dem Dehnungsmesssensor auslesbare Dehnung des Messabschnitts erreichen zu können. Besonders bevorzugt liegt der genannte Querschnitt des Messabschnitts in dem oben erläuterten ersten Teilabschnitt. Insbesondere kann der Messabschnitt nur in dem ersten Teilabschnitt einen solchen im Vergleich. zum Befestigungsabschnitt bzw. zu den Befestigungsabschnitten unterschiedlichen Querschnitt aufweisen. Entsprechend kann durch das Vorsehen einer unterschiedlichen Steifigkeit bzw. unterschiedlichen Dehnbarkeit des Messabschnitts im Vergleich zum Befestigungsabschnitt bzw. zu den Befestigungsabschnitten ein entsprechender Einfluss genommen werden. Besonders bevorzugt liegt der Unterschied nicht über die gesamte Messstrecke hinweg vor, sondern nur über die gesamte Erstreckung des ersten Teilabschnitts in der Messrichtung, wobei der Dehnungsmesssensor ausschließlich innerhalb des Erstreckungsbereichs des ersten Teilabschnitts, bezogen auf die Messrichtung, angeordnet ist.

In einer Ausführungsform ist der Dehnungsmesssensor durch Aufglasen mit dem Messabschnitt verbunden. Die Erfinder haben festgestellt, dass durch die Anbindung des Dehnungsmesssensors an den Messabschnitt mittels Aufglasens der Dehnungsmesssensor besonders zuverlässig starr und langlebig mit dem jeweiligen Messabschnitt verbunden werden kann, sodass eine Dehnung des Messabschnitts möglichst verlustfrei auf den Dehnungsmesssensor übertragen wird. Das Aufglasen ist ein bekannter Prozess, bei dem Glas, das üblicherweise auf amorphem $SiO_2$ basiert, als Bindemittel zum Verbinden des Dehnungsmesssensors mit dem Messabschnitt verwendet wird. Bei einem solchen Aufglasen wird üblicherweise ein Glasfritte-Material zwischen dem Dehnungsmesssensor und dem Messabschnitt vorgesehen, wonach mittels Durchfahrens vordefinierter Temperaturverläufe ein Ausheizen erfolgt. Besonders bevorzugt wird bei dem Ausheizen der gesamte Verbindungsbereich, d.h. Kontaktbereich zwischen Dehnungsmesssensor und Messabschnitt, insbesondere somit über die gesamte untenstehend erläuterte Messfläche, zunächst auf ca. 400°C aufgeheizt, anschließend auf unter 50°C abgekühlt und anschließend erneut aufgeheizt, zumindest bis 400°C, und wieder abgekühlt. Durch das Aufglasen ist der Dehnungsmesssensor besonders zuverlässig und starr mit dem Messabschnitt verbunden, wobei besonders bevorzugt aufgrund des Aufglasens der Dehnungsmesssensor durch eine anorganische Verbindung mit dem ihm zugeordneten Messabschnitt verbunden ist. Bevorzugt sind sowohl der Dehnungsmesssensor als auch sämtliches Material, mittels dessen der Dehnungsmesssensor mit dem Messabschnitt verbunden ist, anorganisch, wodurch einer alterungsbedingten Funktionsbeeinträchtigung besonders wirksam vorgebeugt sein kann. Besonders bevorzugt ist jeweils eine elektrisch isolierende Glasschicht zwischen dem jeweiligen Dehnungsmesssensor und dem jeweiligen, d. h. ihm zugeordneten, Messabschnitt vorgesehen. Bevorzugt weist diese Glasschicht eine Dicke von mindestens 50 nm, sondern mindestens 100 nm, insbesondere mindestens 200 nm auf. Durch die elektrisch isolierende Glasschicht kann eine besonders gute elektrische Entkopplung zwischen dem Messabschnitt und dem Dehnungsmesssensor realisiert sein, wodurch Störeinflüsse des Messabschnitts auf das Auslesen von Messsignalen aus dem Dehnungsmesssensoren besonders vorteilhaft reduziert sein können.

In einer Ausführungsform weisen die Dehnungsmesssensoren jeweils eine Messfläche auf, die sich in einer ersten Flächenrichtung und in einer zweiten Flächenrichtung erstreckt, wobei die zweite Flächenrichtung senkrecht auf der ersten Flächenrichtung steht. Die Messfläche ist durch die beiden Flächenrichtungen aufgespannt. Bevorzugt ist der Dehnungsmesssensor als flächiger Dehnungsmesssensor ausgestaltet, dessen Dicke durch seine Erstreckungslänge senkrecht zur Messfläche definiert ist. Die Flächenrichtungen können geradlinig oder gekrümmt verlaufen, in einer Ausführungsform verläuft eine der Flächenrichtungen geradlinig, die andere gekrümmt. Bevorzugt sind die Dehnungsmesssensoren als Halbleiter-Dehnungsmesssensoren ausgebildet und jeweils mittels eines Wafers hergestellt und weisen eine ebene Seite auf, die die Messfläche als ebene Messfläche ausbildet, so dass die Messrichtungen jeweils gerade sind. Bevorzugt weist der Dehnungsmesssensor über seine Erstreckung entlang der ersten und zweiten Flächenrichtung hinweg überall dieselbe Dicke auf. Besonders bevorzugt erstreckt sich die Messfläche in jeder der Flächenrichtungen über mindestens 0,1 mm, insbesondere mindestens 0,2 mm, insbesondere mindestens 0,3 mm und weniger als 2 mm, insbesondere weniger als 1 mm, insbesondere weniger als 0,8 mm. Bevorzugt weist die Fläche einen Flächeninhalt von mindestens 0,1 mm$^2$, insbesondere mindestens 0,2 mm$^2$, insbesondere weniger als 1 mm$^2$, insbesondere weniger als 0,5 mm$^2$, insbesondere weniger als 0,3 mm$^2$ auf. Besonders bevorzugt ist die Erstreckungslänge des Dehnungsmesssensors entlang erster und zweiter Flächenrichtung durch die Messfläche definiert, sodass sich der Dehnungsmesssensor in der ersten und zweiten Flächenrichtung nicht über die Messfläche hinaus erstreckt. Dabei ist auf den jeweiligen Dehnungsmesssensor abgestellt. Besonders bevorzugt sind die Dehnungsmesssensoren jeweils über ihre Messfläche hinweg starr mit dem jeweiligen Messabschnitt verbunden, der ihnen jeweils zugeordnet ist.

Innerhalb der Erstreckung der Messfläche, die die Messfläche entlang der ersten und zweiten Flächenrichtung aufweist, sind an dem Dehnungsmesssensor mindestens zwei Elektroden, insbesondere mindestens vier Elektroden angeordnet. Die genannten Elektroden sind bevorzugt sämtlich an dem Sensorkörperabschnitt angeordnet. Dabei können die Elektroden zur Messfläche in eine Richtung versetzt angeordnet sein, die sich senkrecht zur ersten und zweiten Flächenrichtung erstreckt. Beispielsweise kann die Messfläche eine Unterseite des Dehnungsmesssensors ausbilden, wobei die Elektroden an der Oberseite des Dehnungsmesssensors angeordnet sind, sich jedoch innerhalb der Erstreckung der Messfläche entlang der ersten und zweiten Flächenrichtung befinden. Besonders bevorzugt sind vier Elektroden innerhalb der Erstreckung der Messfläche entlang den Flächenrichtungen an dem Dehnungsmesssensor vorgesehen. Allgemein bevorzugt ist über die Elektroden ein Messsignal, das eine Dehnung des Dehnungsmesssensors in Messrichtung charakterisiert, auslesbar. So kann beispielsweise über die Elektroden ein Widerstand des Dehnungsmesssensors, der zwischen den Elektroden vorliegt, gemessen werden und als Messsignal aus dem Dehnungsmesssensor ausgelesen werden. Alternativ oder ergänzend kann auch vorgesehen sein, über die Elektroden eine Stromstärke und/oder eine Spannung abzugreifen, die zwischen einer Speiseelektrode und den Elektroden vorliegt bzw. fließt. Bevorzugt sind die Elektroden als Vollbrücke verschaltet. Das Vorsehen einer solchen Vollbrücke ist in der Messtechnik hinreichend bekannt und besonders vorteilhaft, da durch eine solche Brückenschaltung eine Differenzbildung zwischen in der Brückenschaltung miteinander verschalteten Widerständen inhärent gewährleistet ist, wodurch Umwelteinflüsse, wie etwa Temperatureinflüsse, in ihren Auswirkungen auf die Korrektheit des erzielten Messergebnisses bzw. des ausgegebenen Messsignals nach Möglichkeit reduziert werden können. Eine solche Brückenschaltung weist üblicherweise zwei parallele Brückenarme auf, in denen jeweils zumindest zwei Widerstände in Reihe geschaltet sind, wobei an den Armen ein Mittenabgriff zwischen zwei Widerständen der Arme erfolgt. Durch Differenzmessung zwischen den Mittenabgriffen kann ein Sensorsignal erzeugt werden, das anschließend elektronisch aufbereitet wird, wobei das Sensorsignal selbst das Messsignal des Dehnungsmesssensors sein kann oder das aufbereitete Signal. Durch das Vorsehen von vier Elektroden können durch paarweises Abgreifen von Widerständen zwischen jeweils zwei dieser Elektroden sechs verschiedene Widerstände abgegriffen werden, wodurch am Dehnungsmesssensor selbst die erforderlichen Elektroden für eine Vollbrückenschaltung vorgesehen sein können, wobei der Dehnungsmesssensor gleichzeitig eine sehr geringe Größe aufweisen kann. Besonders bevorzugt ist an dem Dehnungsmesssensor eine weitere Elektrode vorgesehen, durch die der Dehnungsmesssensor mit einem Potenzial beaufschlagt werden kann, insbesondere um parasitäre Ströme zu verhindern. Bevorzugt ist die weitere Elektrode außerhalb eines Sensorkörperabschnitts des Dehnungsmesssensors angeordnet, an dem die erläuterten übrigen Elektroden angeordnet sind (von denen z.B. mindestens zwei, insbesondere mindestens vier vorgesehen sind und zwischen denen ein Widerstand abgegriffen wird, so dass sie als Messelektroden vorgesehen sind). Beispielsweise können die übrigen (z.B. vier) Elektroden (d.h. die Messelektroden) jeweils an einer Oberfläche eines auf einem Substrat angeordneten Sensorkörperabschnitts angeordnet sein, wohingegen die weitere Elektrode außerhalb des Sensorkörperabschnitts an dem Substrat angeordnet ist, so dass ein auf die weitere Elektrode aufgebrachtes Potenzial eine Widerstandsmessung zwischen den übrigen Elektroden nicht beeinträchtigt sondern nur der Vermeidung parasitärer Ströme dient. Ein von dem Dehnungsmesssensor ausgebendes (passiv auslesbar oder aktiv ausgebendes) Messsignal, das eine Dehnung des Dehnungsmesssensors an seiner Messfläche in einer Messrichtung charakterisiert, ist über die genannten, an dem Dehnungsmesssensor vorgesehenen Elektroden auslesbar. In einer Ausführungsform ist an den Dehnungsmesssensor selbst eine Differenzschaltung, insbesondere Brückenschaltung vorgesehen, sodass aus dem Dehnungsmesssensor selbst ein Messsignal ausgelesen werden kann, das durch Differenzbildung zwischen den an den Elektroden vorliegenden Spannungen und/oder Strömen ermittelt wird. In einer Ausführungsform wird das Messsignal unmittelbar durch die Elektroden bereitgestellt und anschließend mit einer Datenverarbeitungseinrichtung verarbeitet. Allgemein bevorzugt ist der Dehnungsmesssensor über seine Messfläche hinweg stoffschlüssig mit dem jeweiligen Messabschnitt verbunden, an dem er angeordnet ist. Besonders bevorzugt ist der Dehnungsmesssensor durch eine anorganische Verbindung, die zwischen dem Dehnungsmesssensor und dem Messabschnitt vorgesehen ist, mit dem Messabschnitt verbunden.

In einer Ausführungsform sind an dem Dehnungsmesssensor mindestens vier Elektroden angeordnet, wobei aus den Elektroden ein Messsignal auslesbar ist, das sowohl von einer Dehnung des Dehnungsmesssensors in der Messrichtung als auch von einer Dehnung des Dehnungsmesssensors in einer senkrecht auf der Messrichtung stehenden Zusatzmessrichtung abhängt. Somit beeinflussen Dehnungen, die in zwei aufeinander senkrecht stehenden Richtungen innerhalb der Messfläche auf den Dehnungsmesssensor ausgeübt werden, das Messsignal. Die Ausrichtung des Dehnungsmesssensors an dem Messabschnitt ermöglicht eine Festlegung, in welche Richtungen bzw. in welcher Richtung bei einer bestimmungsgemäßen Verwendung der Messeinrichtung aufgrund der Ausgestaltung und Anordnung des Messabschnitts eine Dehnung des Dehnungsmesssensors erfolgt. Allgemein bevorzugt weist der Messabschnitt, wie obenstehend zur Messrichtung erläutert, auch in einer auf der Messrichtung senkrecht stehenden Zusatzmessrichtung hintereinander angeordnete Teilabschnitte auf, wobei der Dehnungsmesssensor im ersten Teilabschnitt, insbesondere ausschließlich im ersten Teilabschnitt, angeordnet ist und der erste Teilabschnitt durch einen zweiten Teilabschnitt mit dem ersten Befestigungsabschnitt und/oder durch einen dritten Teilabschnitt mit dem zweiten Befestigungsabschnitt verbunden ist. Durch das Vorsehen von in Zusatzmessrichtung hintereinander angeordneten Teilabschnitten kann entsprechend eine gewünschte Dehnung auf Höhe des Dehnungsmesssensors in Zusatzmessrichtung vorteilhaft eingestellt sein. In vorteilhaften Ausführungsführungsformen können die mit Bezug auf die Zusatzmessrichtung hintereinander angeordneten Teilabschnitte entsprechend ausgestaltet bzw. angeordnet sein, wie dies obenstehend zu den in Messrichtung hintereinander angeordneten Teilabschnitten erläutert ist.

In einer Ausführungsform ist aus dem Dehnungsmesssensor ein Messsignal auslesbar, dessen Wert sich ausgehend von einem Ruhewert, den es in einem Ruhezustand der Dehnungsmesseinrichtung aufweist, in dem die Messstrecke eine Ruhestreckenlänge in der Messrichtung aufweist, bei Auftreten einer Dehnung des Grundkörpers unter Realisierung eines Dehnungszustands der Dehnungsmesseinrichtung, in dem die Messstrecke eine Dehnstreckenlänge in der Messrichtung aufweist, auf einen Dehnwert vergrößert. Der Ruhezustand der Dehnungsmesseinrichtung bezeichnet somit einen Zustand, in dem die Messstrecke, über die die Befestigungsabschnitte voneinander in Messrichtung beabstandet sind und über die hinweg der Messabschnitt die Befestigungsabschnitte miteinander verbindet, eine diesem Ruhezustand zugeordnete Ruhestreckenlänge in der Messrichtung aufweist. Die Dehnungsmesseinrichtung ist dazu ausgebildet, eine Dehnung, die der Grundkörper ausgehend von dem Ruhezustand erfährt, zu quantifizieren. Somit ist die Dehnungsmesseinrichtung dazu ausgebildet, eine Veränderung der Streckenlänge der Messstrecke in Messrichtung zu erfassen, da diese Veränderung der Streckenlänge die Dehnung des Grundkörpers, die dieser zwischen den Befestigungsabschnitten erfährt, charakterisiert. Entsprechend weist das Messsignal im Ruhezustand einen Ruhewert auf, der der Ruhestreckenlänge eindeutig zugeordnet ist, und weist das Messsignal in dem Dehnzustand einen Dehnwert auf, der der Dehnstreckenlänge eindeutig zugeordnet ist. Eine Veränderung der Streckenlänge der Messstrecke in Messrichtung resultiert zwingend in einer Veränderung des Werts des Messsignals. Der Wert des Messsignals ist somit durch die Streckenlänge der Messstrecke in Messrichtung definiert. Durch einen Vergleich zwischen Dehnwert und Ruhewert ist somit die Dehnung ermittelbar, die der Grundkörper ausgehend von dem Ruhezustand bis zum Erreichen des Dehnzustands erfahren hat. Besonders bevorzugt beträgt der prozentuale Unterschied zwischen Dehnwert und Ruhewert mindestens das 500-Fache, insbesondere mindestens das 1000-Fache, insbesondere mindestens das 2000-Fache, insbesondere mindestens das 4000-Fache, insbesondere mindestens das 6000-Fache, insbesondere mindestens das 8000-Fache, insbesondere mindestens das 10000-Fache des prozentualen Unterschieds zwischen Dehnstreckenlänge und Ruhestreckenlänge. Der prozentuale Unterschied zwischen zwei Werten ist dabei definiert als Verhältnis der Differenz zwischen größerem und kleinerem Wert zu dem kleineren Wert, als Formel ausgedrückt: $P = (W1-W2):W2$, wobei P den prozentualen Unterschied, W1 den größeren Wert und W2 den kleineren Wert charakterisiert. Der prozentuale Unterschied wird entsprechend sowohl aus den Werten für Dehnwert und Ruhewert als auch aus den Werten für Dehnstreckenlänge und Ruhestreckenlänge ermittelt. Indem der prozentuale Unterschied zwischen Dehnwert und Ruhewert des von dem Dehnungsmesssensor ausgegebenen Messsignals wesentlich größer ist als der prozentuale Unterschied zwischen Dehnstreckenlänge und Ruhestreckenlänge, kann auch mit einer geometrisch sehr klein ausgestalteten Dehnungsmesseinrichtung die Dehnung des Grundkörpers sehr präzise festgestellt werden. Der erhebliche Unterschied zwischen dem prozentualen Unterschied zwischen Dehnwert und Ruhewert einerseits und dem prozentualen Unterschied zwischen Dehnstreckenlänge und Ruhestreckenlänge andererseits ist wie oben erläutert durch besonders vorteilhafte erfindungsgemäße Maßnahmen erreichbar, insbesondere durch die Verwendung des Halbleiter-Dehnungsmesssensors und durch die Verwendung des Messkörpers, der die zwei erläuterten Befestigungsabschnitte und den Messabschnitt aufweist, wobei der Messabschnitt wie oben erläutert besonders vorteilhaft ausgestaltet sein kann und/oder der Dehnungsmesssensor besonders starr mit den Messabschnitten verbunden sein kann.

Die Erfindung betrifft ferner ein Messsystem, das eine erfindungsgemäße Messeinrichtung und eine Datenverarbeitungseinrichtung umfasst. Die Datenverarbeitungseinrichtung ist zum Auslesen des Messsignals aus dem Dehnungsmesssensor ausgebildet. Die Datenverarbeitungseinrichtung ist dazu ausgebildet, in Abhängigkeit von dem aus dem Dehnungsmesssensor ausgelesenen Messsignal einen Wert für die Dehnung des Grundkörpers zu ermitteln, den dieser in Messrichtung, insbesondere in Zusatzmessrichtung, erfahren hat. Besonders bevorzugt ist die Datenverarbeitungseinrichtung elektrisch mit den oben erläuterten, bevorzugt am Dehnungsmesssensor vorgesehenen Elektroden verbunden und dazu ausgebildet, über diese elektrische Verbindung das Messsignal aus dem Dehnungsmesssensor auszulesen. Das erfindungsgemäße Messsystem und die erfindungsgemäße Dehnungsmesseinrichtung können in Ausführungsformen Merkmale aufweisen, die vorliegend im Zusammenhang mit aus dem Stand der Technik bekannten Dehnungsmesseinrichtungen bzw. Messsystemen beschrieben sind.

Die Erfindung wird nachfolgend unter Bezugnahme auf drei Figuren anhand von Ausführungsbeispielen näher erläutert.

Es zeigen:

Figur 1:    in verschiedenen schematischen Prinzipdarstellungen eine erste Ausführungsform einer erfindungsgemäßen Dehnungsmesseinrichtung;

Figur 2:    in verschiedenen schematischen Prinzipdarstellungen eine zweite Ausführungsform einer erfindungsgemäßen Dehnungsmesseinrichtung;

Figur 3:    in verschiedenen schematischen Prinzipdarstellungen eine dritte Ausführungsform einer erfindungsgemäßen Dehnungsmesseinrichtung.

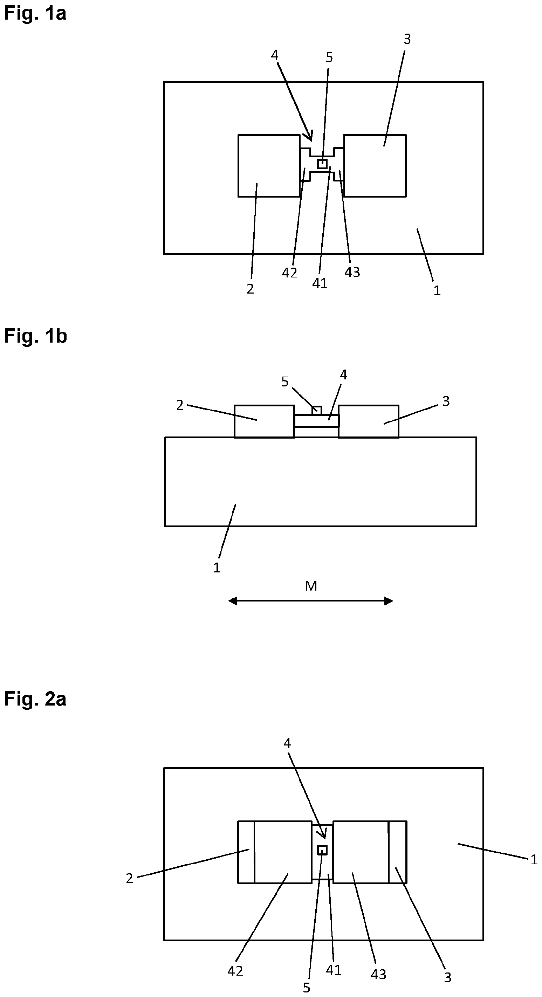

In Figur 1 umfassend die Figuren 1a und 1b ist eine Ausführungsform einer erfindungsgemäßen Dehnungsmesseinrichtung stark vereinfacht schematisch dargestellt. In Figur 1a ist eine Ansicht von oben auf die Dehnungsmesseinrichtung dargestellt, in Figur 1b eine Seitenansicht auf die Dehnungsmesseinrichtung. Die Dehnungsmesseinrichtung umfasst einen Grundkörper 1, der vorliegend und allgemein bevorzugt aus einem Metall hergestellt ist, sowie einen Messkörper, der einen ersten Befestigungsabschnitt 2, einen zweiten Befestigungsabschnitt 3 und einen Messabschnitt 4 aufweist, wobei der Messkörper allgemein bevorzugt aus einem Metall hergestellt ist. An dem Messabschnitt 4 ist ein Dehnungsmesssensor 5 angeordnet, der vorliegend als Si-Kristall-Dehnungsmesssensor ausgebildet ist. In der vorliegend beschriebenen Ausführungsform sind zwar erläuterungshalber zwischen den Befestigungsabschnitten 2, 3 und dem Messabschnitt 4 Trennlinien eingezeichnet, doch ist der Messkörper umfassend die Befestigungsabschnitte 2, 3 und den Messabschnitt 4 aus einem einzigen Material als einstückiges Bauteil hergestellt. In anderen Ausführungsformen kann der Messkörper aus verschiedenen Abschnitten zusammengesetzt sein, die aus einem jeweils anderen Material hergestellt sind. Beispielsweise können die Befestigungsabschnitte 2, 3 aus einem selben Material hergestellt sein und kann der Messabschnitt 4 aus einem sich von dem Material der Befestigungsabschnitte 2, 3 unterscheidenden Material hergestellt sein. Wie aus der Zusammenschau der Figuren 1a und 1b ersichtlich, sind die Befestigungsabschnitte 2, 3 in Messrichtung M voneinander beabstandet und durch den Messabschnitt 4 miteinander verbunden. Somit sind der erste Befestigungsabschnitt 2, der Messabschnitt 4 und der zweite Befestigungsabschnitt 3 in Messrichtung M hintereinander angeordnet. Innerhalb des Messabschnitts 4 weist der Messkörper eine wesentlich geringere Dicke auf als innerhalb seiner Befestigungsabschnitte 2, 3. Die Dicke ist vorliegend und erfindungsgemäß allgemein vorteilhaft als Erstreckungslänge des Messkörpers in einer Richtung definiert, die senkrecht auf der Messrichtung M und insbesondere auf der Zusatzmessrichtung steht, wobei besonders bevorzugt in dieser Richtung der Messabschnitt 4 von dem Grundkörper 1 beabstandet ist.

Wie aus Figur 1a ersichtlich, weist der Messabschnitt 4 drei in Messrichtung M hintereinander angeordnete Teilabschnitte 41, 42, 43 auf. Der erste Teilabschnitt 41 ist, erfindungsgemäß allgemein bevorzugt, mit Bezug auf die Messrichtung M zwischen dem zweiten Teilabschnitt 42 und dem dritten Teilabschnitt 43 angeordnet und durch den zweiten Teilabschnitt 42 mit dem ersten Befestigungsabschnitt 2 verbunden und durch den dritten Teilabschnitt 43 mit dem zweiten Befestigungsabschnitt 3 verbunden. Wie aus Figur 1a ersichtlich, weist der Messabschnitt 4, erfindungsgemäß allgemein bevorzugt, über seinen ersten Teilabschnitt 41 hinweg eine geringere Breite auf als in seinem zweiten Teilabschnitt 42 und seinem dritten Teilabschnitt 43. Die Breite definiert die Erstreckungslänge des Messabschnitts 4 senkrecht zur Messrichtung M und senkrecht zu der Richtung, in der sich der Messkörper mit seiner Dicke erstreckt. Der Dehnungsmesssensor 5 ist ausschließlich im ersten Teilabschnitt 41 angeordnet. Aus der Zusammenschau der Figuren 1a und 1b ist ersichtlich, dass aufgrund der geometrischen Ausgestaltung des Messkörpers im ersten Teilabschnitt 41, in dem der Dehnungsmesssensor 5 ausschließlich angeordnet ist, bei einer Dehnung des Grundkörpers 1 innerhalb der Messstrecke, um die die Befestigungsabschnitte 2, 3 in Messrichtung M voneinander beabstandet sind, im Bereich des ersten Teilabschnitts 41 und somit im Bereich des Dehnungsmesssensors 5 eine im Vergleich zu den Teilabschnitten 42, 43 eine besonders große Dehnung auftritt. Somit kann über den Dehnungsmesssensor 5 eine Dehnung des Grundkörpers 1, die dieser innerhalb der Messstrecke erfährt, besonders präzise erfasst werden. Dabei ist zu berücksichtigen, dass die Messstrecke eine Strecke mit Bezug auf die Messrichtung M definiert. In den Figuren 1a und 1b ist die Dehnungsmesseinrichtung in ihrem Ruhezustand dargestellt. Ausgehend von dem Ruhezustand der Dehnungsmesseinrichtung kann der Grundkörper 1 in Messrichtung M gedehnt werden, wodurch sich die Länge der Messstrecke verändert, nämlich ausgehend von einer Ruhestreckenlänge zu einer Dehnstreckenlänge. Diese Veränderung der Streckenlänge der Messstrecke aufgrund der Dehnung des Messkörpers kann von dem Dehnungsmesssensor 5 besonders vorteilhaft erfasst werden.

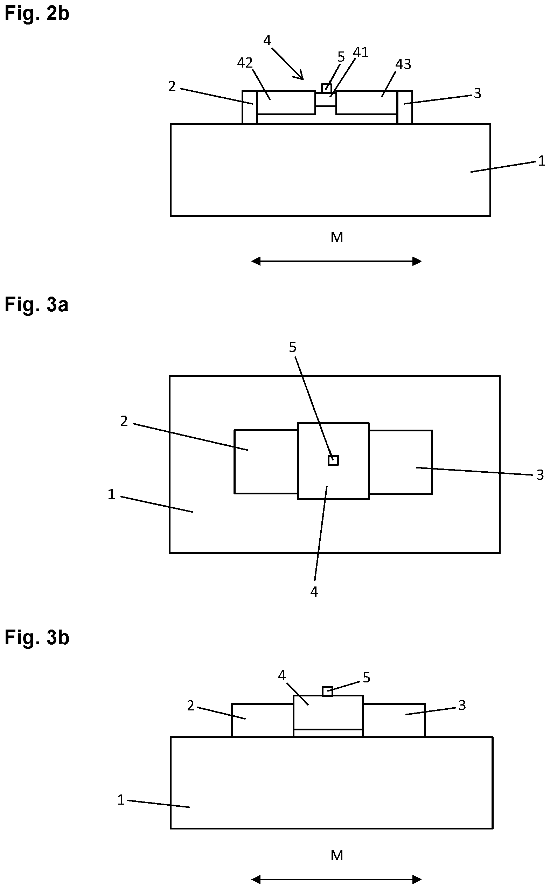

In Figur 2 umfassend die Figuren 2a und 2b ist schematisch stark vereinfacht eine weitere Ausführungsform einer erfindungsgemäßen Dehnungsmesseinrichtung dargestellt. Während Figur 2a eine Ansicht von oben auf die Dehnungsmesseinrichtung darstellt, zeigt Figur 2b eine Seitenansicht. Die Ausführungsform gemäß Figur 2 unterscheidet sich von der Ausführungsform gemäß Figur 1 im Wesentlichen durch die Ausgestaltung des Messkörpers. Bei der Ausführungsform gemäß Figur 2 sind die Befestigungsabschnitte 2, 3 aus einem steiferen Material als der Messabschnitt 4, und der erste Teilabschnitt 41 des Messabschnitts 4 weist eine wesentlich geringere Dicke und eine geringere Breite als der zweite Teilabschnitt 42 und der dritte Teilabschnitt 43 auf. In Figur 2 sind nur erläuterungshalber Trennlinien zwischen den verschiedenen Teilabschnitten 41, 42, 43 eingezeichnet. In besonders bevorzugten Ausführungsformen ist der erste Teilabschnitt 41 aus einem elastischeren Material hergestellt als zweiter und dritter Teilabschnitt 42, 43. Hierdurch kann gewährleistet sein, dass der Messkörper sich bei einer Dehnung des Grundkörpers innerhalb der Messstrecke im Wesentlichen ausschließlich innerhalb des ersten Teilabschnitts 41 erfolgt. Der Dehnungsmesssensor 5, der vorliegend durch Aufglasen mit dem ersten Teilabschnitt 41 des Messabschnitts 4 verbunden ist, kann aufgrund des Aufglasens die in dem ersten Teilabschnitt 41 erfolgte Dehnung des Messabschnitts 4 besonders vorteilhaft aufnehmen, so dass eine Dehnung des Grundkörpers 1 besonders zuverlässig ermittelbar ist.

In Figur 3 umfassend die Figuren 3a und 3b ist eine weitere Ausführungsform einer erfindungsgemäßen Dehnungsmesseinrichtung stark vereinfacht schematisch dargestellt. Figur 3a zeigt eine Ansicht von oben auf die Dehnungsmesseinrichtung, Figur 3b eine Seitenansicht. Die Ausführungsform gemäß Figur 3 unterscheidet sich von den Ausführungsformen gemäß Figur 1 und 2 im Wesentlich durch die Ausgestaltung des Messkörpers. Während bei den in den Figuren 1 und 2 dargestellten Ausführungsformen aufgrund der Ausgestaltung des Messkörpers eine Dehnung des Grundkörpers 1 so in dem Messabschnitt 4 transformiert wird, dass in dem Bereich des Messabschnitts 4, in dem der Dehnungsmesssensor 5 angeordnet ist, eine größere Dehnung erfolgt als in dem Grundkörper 1, ist bei dem Ausführungsbeispiel gemäß Figur 3 dazu umgekehrt vorgesehen, dass bei einer Dehnung des Grundkörpers 1 sich der Messabschnitt 4 weniger verformt bzw. weniger dehnt als der Grundkörper 1. Hierzu weist der Messkörper einen ersten und zweiten Befestigungsabschnitt 2, 3 auf, die aus einem elastischeren Material hergestellt sind als der Messabschnitt 4. Darüber hinaus weist der Messabschnitt 4 eine größere Dicke und größere Breite auf als die Befestigungsabschnitte 2, 3. Bei einer Dehnung des Grundkörpers 1 entlang der Messrichtung M über die Messstrecke hinweg erfolgt somit eine erhebliche Verformung der Befestigungsabschnitte 2,3, mittels derer der Messabschnitt 4 an den Grundkörper 1 angebunden ist, wohingegen der Messabschnitt 4 eine geringere Verformung bzw. Dehnung in Messrichtung M erfährt. Hierdurch kann sichergestellt sein, dass der Dehnungsmesssensor 5 keine "Überdehnung" erfährt, so dass auch erhebliche Dehnungen des Grundkörpers 1 zuverlässig ermittelbar sind.

**Bezugszeichenliste**

1   Grundkörper
2   erster Befestigungsabschnitt
3   zweiter Befestigungsabschnitt

4       Messabschnitt
5       Dehnungsmesssensor
41      erster Teilabschnitt
42      zweiter Teilabschnitt
43      dritter Teilabschnitt
M       Messrichtung

**Patentansprüche**

1.  Dehnungsmesseinrichtung umfassend einen Grundkörper (1), dessen Dehnung durch die Dehnungsmesseinrichtung zu messen ist, und einen Messkörper, wobei der Messkörper einen ersten und einen zweiten Befestigungsabschnitt (2, 3) aufweist, mittels derer er an dem Grundkörper (1) befestigt ist und die entlang einer Messrichtung (M) um eine Messstrecke voneinander beabstandet sind und über diese Messstrecke hinweg durch einen Messabschnitt (4) des Dehnungsmesskörpers miteinander verbunden sind, wobei der Messabschnitt (4) und der Grundkörper (1) sich über die Messstrecke hinweg in ihren Dehnungseigenschaften entlang der Messrichtung (M) unterscheiden, wobei ein Dehnungsmesssensor (5) an dem Messabschnitt (4) befestigt ist,
    **dadurch gekennzeichnet, dass**
    der Dehnungsmesssensor (5) als Halbleiter-Dehnungsmesssensor, insbesondere als Si-Dehnungsmesssensor, ausgebildet ist und fest mit dem Messabschnitt (4) verbunden ist.

2.  Dehnungsmesseinrichtung nach Anspruch 1,
    **dadurch gekennzeichnet, dass**
    der Messkörper nur mittels seiner Befestigungsabschnitte (2, 3), insbesondere über die gesamte Erstreckung der Befestigungsabschnitte (2, 3) entlang der Messrichtung (M) hinweg, positionsfest relativ zum Grundkörper (1) fixiert ist, wobei der Messabschnitt (4) entlang der Messrichtung (M) relativ zum Grundkörper (1) beweglich ist, wobei insbesondere der Messabschnitt (4) senkrecht zur Messrichtung (M) von dem Grundkörper (1) beabstandet ist.

3.  Dehnungsmesseinrichtung nach einem der vorangehenden Ansprüche,
    **dadurch gekennzeichnet, dass**
    der Messabschnitt (4) zumindest zwei, insbesondere zumindest drei, in Messrichtung (M) hintereinander angeordnete Teilabschnitte (41, 42, 43) aufweist, wobei der Dehnungsmesssensor (5) in einem ersten der Teilabschnitte (41) angeordnet ist und ein zweiter der Teilabschnitte (42) den ersten Teilabschnitt (41) mit dem ersten Befestigungsabschnitt (2) verbindet, wobei insbesondere sich der erste Teilabschnitt (41) von dem zweiten Teilabschnitt (42) in seiner Dehnbarkeit entlang der Messrichtung (M) unterscheidet, wobei insbesondere ein dritter der Teilabschnitte (43) den ersten Teilabschnitt (41) mit dem zweiten Befestigungsabschnitt (3) verbindet und sich der erste Teilabschnitt (41) insbesondere von dem dritten Teilabschnitt (43) in seiner Dehnbarkeit entlang der Messrichtung (M) unterscheidet.

4.  Dehnungsmesseinrichtung nach Anspruch 3,
    **dadurch gekennzeichnet, dass**
    der erste Teilabschnitt (41) eine Erstreckungslänge entlang der Messrichtung (M) aufweist, die weniger als 20 %, insbesondere weniger als 10 %, insbesondere weniger als 5 %, insbesondere weniger als 2 % der Messstrecke beträgt und/oder die weniger als 5 mm, insbesondere weniger als 3 mm, insbesondere weniger als 1 mm beträgt.

5.  Dehnungsmesseinrichtung nach einem der vorangehenden Ansprüche,
    **dadurch gekennzeichnet, dass**
    der Messabschnitt (4) innerhalb der Messstrecke einen kleineren Querschnitt senkrecht zur Messrichtung (M) aufweist als der Grundkörper (1) innerhalb der Messstrecke und/oder aus einem über die Messstrecke hinweg dehnbareren Material hergestellt ist als der Grundkörper (1).

6.  Dehnungsmesseinrichtung nach einem der vorangehenden Ansprüche,
    **dadurch gekennzeichnet, dass**
    der Messabschnitt (4) innerhalb der Messstrecke einen größeren Querschnitt senkrecht zur Messrichtung (M) aufweist als die Befestigungsabschnitte (2, 3), und/oder dass der Messabschnitt (4) über die Messtrecke hinweg aus einem steiferen Material hergestellt ist als die Befestigungsabschnitte (2, 3).

7.  Dehnungsmesseinrichtung nach einem der vorangehenden Ansprüche,
    **dadurch gekennzeichnet, dass**
    der Dehnungsmesssensor (5) als Halbleiter-Dehnungsmesssensor, insbesondere als Si-Dehnungsmesssensor, ausgebildet ist, wobei insbesondere der Dehnungsmesssensor (5) eine Dicke von weniger als 50 $\mu$m, insbesondere weniger als 40 $\mu$m und/oder eine flächige Erstreckung von weniger als 1 mm$^2$, insbesondere weniger als 0,5 mm$^2$ aufweist.

8.  Dehnungsmesseinrichtung nach einem der vorangehenden Ansprüche,
    **dadurch gekennzeichnet, dass**
    der Dehnungsmesssensor (5) durch Aufglasen mit dem Messabschnitt (4) verbunden ist, wobei insbesondere eine elektrisch isolierende Glasschicht zwischen dem Dehnungsmesssensor (5) und dem Messabschnitt (4) vorgesehen ist.

9.  Dehnungsmesseinrichtung nach einem der vorangehenden Ansprüche,

**dadurch gekennzeichnet, dass**
der Dehnungsmesssensor (5) eine Messfläche aufweist, die sich in einer ersten Flächenrichtung und in einer zweiten, auf der ersten senkrecht stehenden Flächenrichtung erstreckt und deren Flächeninhalt mindestens 0,1 mm$^2$, insbesondere mindestens 0,2 mm$^2$ beträgt und/oder die eine Erstreckungslänge in Messrichtung (M) von mindestens 0,1 mm und weniger als 2 mm aufweist, wobei der Dehnungsmesssensor (5) über die Messfläche hinweg starr mit dem Messabschnitt (4) verbunden ist, wobei sich die Messfläche ausschließlich innerhalb der Messstrecke erstreckt.

10. Dehnungsmesseinrichtung nach Anspruch 9,
**dadurch gekennzeichnet, dass**
innerhalb der Erstreckung der Messfläche entlang den Flächenrichtungen mindestens zwei Elektroden, insbesondere mindestens vier Elektroden, an dem Dehnungsmesssensor (5) angeordnet sind, über die eine Messsignal, das eine Dehnung des Dehnungsmesssensors (5) in Messrichtung (M) charakterisiert, auslesbar ist.

11. Dehnungsmesseinrichtung nach einem der Ansprüche 9 oder 10,
**dadurch gekennzeichnet, dass**
der Dehnungsmesssensor (5) über die Messfläche hinweg stoffschlüssig mit dem Messabschnitt (4) verbunden ist.

12. Dehnungsmesseinrichtung nach einem der vorangehenden Ansprüche,
**dadurch gekennzeichnet, dass**
an dem Dehnungsmesssensor (5) mindestens 4 Elektroden angeordnet sind die insbesondere miteinander als Vollbrücke verschaltet sind.

13. Dehnungsmesseinrichtung nach einem der vorangehenden Ansprüche,
**dadurch gekennzeichnet, dass**
aus dem Dehnungsmesssensor (5) ein Messsignal auslesbar ist, dessen Wert sich ausgehend von einem Ruhewert in einem Ruhezustand der Dehnungsmesseinrichtung, in dem die Messstrecke eine Ruhestreckenlänge in der Messrichtung (M) aufweist, bei Auftreten einer Dehnung des Grundkörpers (1) unter Realisierung eines Dehnzustands der Dehnungsmesseinrichtung, in dem die Messstrecke eine Dehnstreckenlänge in der Messrichtung (M) aufweist, auf einen Dehnwert vergrößert, wobei ein prozentualer Unterschied zwischen Dehnwert und Ruhewert mindestens das 500-Fache, insbesondere mindestens das 1000-Fache, insbesondere mindestens das 2000-Fache, insbesondere mindestens das 4000-Fache eines prozentualen Unterschieds zwischen Dehnstreckenlänge und Ruhestreckenlänge beträgt.

14. Messsystem umfassend eine Dehnungsmesseinrichtung nach einem der vorangehenden Ansprüche und eine Datenverarbeitungseinrichtung, wobei die Datenverarbeitungseinrichtung dazu ausgebildet ist, aus dem Dehnungsmesssensor ein Messsignal auszulesen und aus dem Messsignal einen Wert für eine Dehnung des Grundkörpers (1) im Bereich der Messstrecke zu ermitteln.

**Fig. 1a**

**Fig. 1b**

**Fig. 2a**

**Fig. 2b**

**Fig. 3a**

**Fig. 3b**

Europäisches
Patentamt

European
Patent Office

Office européen
des brevets

# EUROPÄISCHER RECHERCHENBERICHT

**Nummer der Anmeldung**

EP 24 19 8516

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 993 455 B1 (YOKOGAWA ELECTRIC CORP [JP]) 5. Februar 2020 (2020-02-05) * Absatz [0048]; Anspruch 7; Abbildung 6 * ----- | 1-14 | INV. G01B7/16 |
| A | US 2007/240519 A1 (SHIMAZU HIROMI [JP] ET AL) 18. Oktober 2007 (2007-10-18) * Absatz [0032] - Absatz [0047]; Abbildung 1 * ----- | 1-14 | |

**RECHERCHIERTE SACHGEBIETE (IPC)**

G01B

Der vorliegende Recherchenbericht wurde für alle Patentansprüche erstellt

| Recherchenort | Abschlußdatum der Recherche | Prüfer |
|---|---|---|
| München | 15. Januar 2025 | Malcoci, Andrei |

EPO FORM 1503 03.82 (P04C03)

**EP 4 524 509 A1**

## ANHANG ZUM EUROPÄISCHEN RECHERCHENBERICHT
## ÜBER DIE EUROPÄISCHE PATENTANMELDUNG NR.

EP 24 19 8516

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2025

| Im Recherchenbericht angeführtes Patentdokument | Datum der Veröffentlichung | Mitglied(er) der Patentfamilie | Datum der Veröffentlichung |
|---|---|---|---|
| EP 2993455 B1 | 05-02-2020 | CN 105403244 A | 16-03-2016 |
| | | EP 2993455 A1 | 09-03-2016 |
| | | JP 6119703 B2 | 26-04-2017 |
| | | JP 2016053541 A | 14-04-2016 |
| | | US 2016069755 A1 | 10-03-2016 |
| US 2007240519 A1 | 18-10-2007 | JP 2007255953 A | 04-10-2007 |
| | | US 2007240519 A1 | 18-10-2007 |
| | | US 2009199650 A1 | 13-08-2009 |

EPO FORM P0461

Für nähere Einzelheiten zu diesem Anhang : siehe Amtsblatt des Europäischen Patentamts, Nr.12/82